(19) Europäisches Patentamt
European Patent Office
Office européen des brevets

(11) **EP 4 521 105 A1**

(12) **EUROPEAN PATENT APPLICATION**
published in accordance with Art. 153(4) EPC

(43) Date of publication:
**12.03.2025 Bulletin 2025/11**

(21) Application number: **23799422.3**

(22) Date of filing: **03.04.2023**

(51) International Patent Classification (IPC):
***G01N 29/032*** (2006.01)

(52) Cooperative Patent Classification (CPC):
**G01N 29/032**

(86) International application number:
**PCT/JP2023/013813**

(87) International publication number:
**WO 2023/214490 (09.11.2023 Gazette 2023/45)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.05.2022 JP 2022076424**

(71) Applicant: **Kurita Water Industries Ltd.
Tokyo 164-0001 (JP)**

(72) Inventors:
• **SONODA, Yuuji**
**Tokyo 164-0001 (JP)**
• **SAIGUSA, Takashi**
**Tokyo 164-0001 (JP)**
• **FUTAKI, Sakae**
**Tokyo 164-0001 (JP)**

(74) Representative: **TBK
Bavariaring 4-6
80336 München (DE)**

(54) **UNDERWATER BUBBLE DETECTING METHOD, AND DEGASSING AGENT ADDING METHOD EMPLOYING SAME**

(57) An underwater bubble detecting method which can accurately and easily detect underwater gas bubbles even when water containing fibrous materials and gas bubbles is present in a water-feeding pipe, and a degassing agent adding method using the method are provided. The underwater bubble detecting method detects gas bubbles in the water containing fibrous materials and gas bubbles by measuring the intensity of ultrasonic waves received by a reception unit of an ultrasonic through-beam sensor.

EP 4 521 105 A1

**Description**

Technical Field

The present invention relates to an underwater bubble detecting method for detecting gas bubbles in water containing fibrous materials and gas bubbles, and a degassing agent adding method using the method.

Background Art

Gas bubbles that occur in a papermaking step and the like in paper manufacturing, especially those remaining under water, adversely affect quality and productivity of paper products. For example, when gas bubbles and coagulated materials caused by gas bubbles as nuclei contaminate a product, product defects called bubble mottles occur. In addition, the underwater gas bubbles cause fluctuations in rotation speeds of various pumps, pressures in water-feeding pipes, and liquid levels in papermaking apparatuses, resulting in lower productivity, due to reduced water feed efficiency, lower product quality, etc.

To inhibit such harmful effects caused by gas bubbles, visual observation of gas bubbles on a liquid level and measurement of a height of the liquid level are performed, and a defoaming agent is added based on this information.

For example, Patent Literature 1 describes detecting the degree of foaming at a liquid level by measuring a height of the liquid level using an ultrasonic level meter or a laser distance meter.

Patent Literature 2 also describes pressurizing and depressurizing an interior of a measurement cell and measuring an amount of dissolved gas from the relationship between a volume change and an internal pressure.

Citation List

Patent Literature

PTL1: JP 2012-76059 A

PTL2: JP 2005-133240 A

Summary of Invention

Technical Problem

However, the method described in Patent Literature 1 could not accurately detect gas bubbles when the height of the liquid level was not even, nor could it detect gas bubbles in the water-feeding pipe or the like.

In addition, the method described in Patent Literature 2 requires time and labor for measurement because it involves operations to fluctuate the internal pressure in the measurement cell, and in some cases, accurate detection was also difficult due to clogging or the like of fibrous materials.

The present invention has been made to solve the above problems, and an objective is to provide an underwater bubble detecting method and a degassing agent adding method using the method, which can accurately and easily detect underwater gas bubbles, even when water containing fibrous materials and gas bubbles is present in the water-feeding pipe.

Solution to Problem

The present invention is based on the finding that an ultrasonic through-beam sensor can accurately detect underwater gas bubbles, even for the water containing fibrous materials and gas bubbles in the water-feeding pipe.

The present invention provides the following means.

[1] An underwater bubble detecting method for detecting gas bubbles in water containing fibrous materials and gas bubbles by measuring intensity of ultrasonic waves received by a reception unit of an ultrasonic through-beam sensor.

[2] The underwater bubble detecting method according to [1], wherein an oscillation frequency of the ultrasonic waves is 0.5 MHz or more.

[3] The underwater bubble detecting method according to [1] or [2], wherein the water containing fibrous materials and gas bubbles is flowing water and the intensity of ultrasonic waves is monitored continuously and periodically.

[4] The underwater bubble detecting method according to any one of [1] to [3], wherein the water containing fibrous materials and gas bubbles has a residue fraction of 100 mg/L or more on a sieve having an opening of 20 $\mu$m.

[5] The underwater bubble detecting method according to any one of [1] to [4], wherein the water containing fibrous materials is an aqueous slurry in a paper manufacturing process.

[6] The underwater bubble detecting method according to any one of [1] to [5], wherein a pressure of the water containing fibrous materials and gas bubbles at a measurement point of the intensity of ultrasonic waves is less than 0.15 MPa.

[7] The underwater bubble detecting method according to any one of [3] to [6], wherein the pressure of the water containing fibrous materials and gas bubbles at the measurement point of the intensity of ultrasonic waves is 0.9 to 1.1 times the pressure at a target point for monitoring underwater gas bubbles upstream of the measurement point.

[8] The underwater bubble detecting method according to any one of [1] to [7], wherein an ultrasonic attenuation rate expressed by the following expression (1) is an index of an amount of gas bubbles:

$$\text{Ultrasonic Attenuation Rate } [\%] = (R_0 - R_1)/R_0 \times 100 \quad (1)$$

wherein $R_0$ is the ultrasonic reception intensity measured for water free of gas bubbles, and $R_1$ is the ultrasonic reception intensity measured for the water containing fibrous materials and gas bubbles.

[9] A degassing agent adding method using the underwater bubble detecting method according to any one of [1] to [7], wherein an amount of a degassing agent to be added to the water containing fibrous materials and gas bubbles is controlled depending on the intensity of ultrasonic waves received.

[10] A degassing agent adding method using the underwater bubble detecting method according to [8], wherein an amount of a degassing agent to be added to the water containing fibrous materials and gas bubbles is controlled using the ultrasonic attenuation rate as the index of the amount of gas bubbles.

Advantageous Effects of Invention

According to the underwater bubble detecting method of the present invention, underwater gas bubbles can be accurately and easily detected, even when water containing fibrous materials and gas bubbles is present in a water-feeding pipe.

Therefore, the underwater bubble detecting method of the present invention is useful in processes such as the addition or the like of a degassing agent to raw material pulp slurry, white water, etc. in paper manufacturing.

Description of Embodiments

In an underwater bubble detecting method of the present invention, gas bubbles in water containing fibrous materials and gas bubbles are detected by measuring intensity of ultrasonic waves received at a reception unit of an ultrasonic through-beam sensor.

By using the ultrasonic through-beam sensor, gas bubbles in the water containing fibrous materials and gas bubbles can be accurately and easily detected.

The water containing fibrous materials and gas bubbles is not limited, but includes, for example, aqueous slurry in each step of paper manufacturing, containing gas bubbles. Examples of the aqueous slurry include raw material pulp slurry and white water.

By using the ultrasonic through-beam sensor, only gas bubbles can be accurately detected without the influence of fibrous materials such as pulp contained in water, and filler and the like of a paper.

In the ultrasonic through-beam sensor, an oscillation unit that oscillates ultrasonic waves and a reception unit that receives these oscillated ultrasonic waves are arranged opposite each other, and a measurement target is arranged between the oscillation unit and the reception unit. The ultrasonic waves oscillated from the oscillation unit are intercepted or reflected by the measurement target and the intensity of the ultrasonic waves received by the reception unit changes. By measuring the intensity of the ultrasonic waves received by the reception unit (hereinafter also referred to as "ultrasonic reception intensity"), gas bubbles in water containing fibrous materials and gas bubbles can be detected to obtain information related to the gas bubbles.

In the present invention, for example, water containing fibrous materials and gas bubbles in a container or water containing fibrous materials and gas bubbles passing through a water-feeding pipe can be the measurement target.

Water free of gas bubbles is a blank, the ultrasonic reception intensity measured on the blank is $R_0$, the ultrasonic reception intensity measured on the water containing fibrous materials and gas bubbles is $R_1$, and $\{(R_0-R_1)/R_0 \times 100\}[\%]$ is obtained and this value is defined as an ultrasonic attenuation rate.

The ultrasonic attenuation rate is a numerical value in which influence of environmental factors on underwater gas bubbles is reduced and can be an index of an amount of gas bubbles.

Furthermore, in the measurement using the ultrasonic through-beam sensor of the present invention, if it is considered that the fibrous materials hardly affect the ultrasonic reception intensity, the blank water free of gas bubbles may be free of fibrous materials.

Underwater gas bubbles are easily affected by a pressure applied to the water containing fibrous materials and gas bubbles, which is the measurement target. For this reason, in the measurement by the ultrasonic through-beam sensor, when an objective is to monitor underwater gas bubbles under atmospheric pressure, a pressure of the water containing fibrous materials and gas bubbles at a measurement section of the ultrasonic through-beam sensor, i.e., at a point where the intensity of ultrasonic waves is measured, is preferably less than 0.15 MPa, more preferably 0.1 MPa or less, even more preferably 0.05 MPa or less, and also 0 MPa or more.

In addition, when the objective is to monitor underwater gas bubbles under a pressure higher than atmospheric pressure and a measurement point of the ultrasonic through-beam sensor is downstream of flowing water containing fibrous materials and gas bubbles, a pressure of the flowing water at the measurement section of the ultrasonic through-beam sensor, i.e., at the measurement point of the intensity of ultrasonic waves, is preferably at a pressure equivalent to the pressure at the target point upstream where underwater gas bubbles are monitored, more preferably 0.8 to 1.1 times the pressure at the target point upstream where underwater gas bubbles are monitored, and even more preferably 0.85 to 1.05 times.

An oscillation frequency of ultrasonic waves from the oscillation unit of the ultrasonic through-beam sensor is preferably 0.5 MHz or more, more preferably 1 MHz or more, even more preferably 2 MHz or more, and still more preferably 3 MHz or more. When the oscillation frequency is 0.5 MHz or more, underwater gas bubbles can be detected more accurately, and it is possible to measure underwater gas bubbles even when fibrous materials and inorganic particulate materials are mixed.

In addition, the oscillation frequency is preferably 50 MHz or less, more preferably 20 MHz or less, and even more preferably 10 MHz or less, from the viewpoint of sensitivity to underwater gas bubbles.

In the case where the water containing fibrous materials and gas bubbles is flowing water in the water-feeding pipe and the like, the intensity of ultrasonic waves can be monitored continuously and periodically. In this case, by using an instrument that can measure automatically and periodically, efficient monitoring can be achieved. Based on accumulated data of the ultrasonic attenuation rate by such continuous monitoring, information corresponding to number of gas bubbles and a gas bubble diameter can be obtained, and based on this information, a gas bubble diameter distribution and a volume distribution of underwater gas bubbles, and an amount of gas bubbles can be estimated.

The ultrasonic through-beam sensor is suitable for periodic and continuous monitoring as described above, where the water containing fibrous materials and gas bubbles is the measurement target. The ultrasonic through-beam sensor is also suitable for long-term continuous monitoring when the water that is the measurement target has a residue fraction of 100 mg/L or more on a sieve having an opening of 20 $\mu$m.

Since measurement by using a volumetric gas bubble measuring apparatus requires changing the pressure on the water containing fibrous materials and gas bubbles, that is the measurement target, measurement operation becomes complicated and time-consuming, and the more fibrous materials there are, the more likely it is that clogging will occur in a measurement cell or the like.

In contrast, the ultrasonic through-beam sensor does not come into contact with the water containing fibrous materials and gas bubbles, that is the measurement target, and the measurement operation can be performed without being affected by the concentration of fibrous materials, making monitoring easier and longer.

The underwater bubble detecting method with respect to the present invention as described above is useful when a degassing agent is added to the water containing fibrous materials and gas bubbles, especially the aqueous slurry of the paper manufacturing process, and an amount of the degassing agent to be added can be controlled depending on the intensity of the ultrasonic waves received by the reception unit of the ultrasonic through-beam sensor.

Furthermore, as described above, since the ultrasonic attenuation rate is the index of the amount of gas bubbles, the amount of the degassing agent to be added to the water containing fibrous materials and gas bubbles can also be controlled based on the ultrasonic attenuation rate measured for the aqueous slurry. The underwater bubble detecting method, in which such ultrasonic attenuation rate is the index of the amount of gas bubbles, is also useful for the degassing agent adding method.

Examples

Hereinafter, the present invention will be described by way of examples, but the present invention is not limited by the following examples.

[Measurement Methods]

Various measurement methods of physical properties of samples in the following tests are as follows.

<Ultrasonic Attenuation Rate>

Ultrasonic waves were oscillated in a radial direction of the water-feeding pipe from the oscillation unit in contact with a side circumferential surface of the water-feeding pipe using the ultrasonic through-beam sensor, and the intensity of ultrasonic waves received at the reception unit in contact with the side circumferential surface of the opposite side of the radial direction was measured.

Water -free of gas bubbles was the blank, and an attenuation rate of the ultrasonic reception intensity $R_1$ for the sample to the ultrasonic reception intensity $R_0$ for the blank, $\{(R_0-R_1)/R_0\times100\}[\%]$, was the ultrasonic attenuation rate.

Unless otherwise noted, the oscillation frequency of the ultrasonic wave was 3 MHz, and the ultrasonic attenuation rate was calculated as the average of 10 measurements taken at 1 minute intervals.

<Amount of Underwater Gas Bubbles (Volumetric Gas Bubble Measuring Apparatus)>

A sample was sealed in a measurement cell of a volumetric gas bubble measuring apparatus, and the amount of underwater gas bubbles was measured at 5-minute intervals from the change in volume when pressurized (maximum: 0.5 MPa) and depressurized (minimum: -0.08 MPa).

<Average Gas Bubble Diameter>

Using a laser diffraction/scattering particle size distribution analyzer ("LA-300", produced by HORIBA, Ltd.; hereinafter referred to as the same), the liquid of the measurement target was passed through at a flow rate of 10 L/minute and a median diameter (D50) was measured and this was regarded as an average gas bubble diameter.

<SS (Suspended Solids) Concentration>

The SS concentration was measured in accordance with Pulps-Determination of stock concentration of JIS P 8225:2003.

<Residue Fraction on Sieve Having Opening of 20 $\mu$m>

The sample was poured onto a stainless steel sieve having an opening of 20 $\mu$m, washed thoroughly with tap water, and a residue on the sieve was collected. This residue was dried at 105°C for 3 hours and then weighed (absolute dry weight). Using the expression of "absolute dry weight [g]/sample volume [mL]$\times$1,000,000", a residue fraction on the sieve having an opening of 20 $\mu$m [mg/L] was calculated.

[Test 1] (Confirmation of Gas Bubble Detection by Ultrasonic Intensity)

Water containing gas bubbles having an average gas bubble diameter of 100 $\mu$m, water dispersion (slurry) of LBKP (Leaf Bleached Kraft Pulp) having CSF (Canadian Standard Freeness) of 420 mL, or water dispersion of calcium carbonate having an average particle diameter of 4 $\mu$m was used to prepare the various samples shown in Table 1 below.

Here "water containing gas bubbles having an average gas bubble diameter of 100 $\mu$m" refers to water, in which a surfactant (a mixture of sodium $\alpha$-olefin sulfonate and polyoxyethylene fatty acid alkanolamide) is added to tap water, air is supplied at a flow rate of 0.05, 0.1, or 0.15 L/minute, and the water is passed through a stirring pump at a flow rate of 10 L/minute (the amount of gas bubbles is 0.5, 1.0, or 1.5% by volume), wherein an amount of surfactant to be added is adjusted so that the average gas bubble diameter is 100 $\mu$m.

For the water dispersion of LBKP or calcium carbonate, the surfactant was added in the same amount as in Example 1-6 (the amount of gas bubbles is 1.0% by volume) in Example 1-8 and Example 1-9, and in an amount of 0.01% by mass of the amount added in Example 1-6 (the amount of gas bubbles is 1.0% by volume) in Example 1-10 to Example 1-13, and fed to the stirring pump at the flow rate of 10 L/minute.

Each sample that passed through the stirring pump was fed into the water-feeding pipe at the flow rate of 10 L/minute and the ultrasonic attenuation rate was measured with an ultrasonic underwater gas bubble measuring apparatus. The measurement results are shown in Table 1.

The blank is the tap water fed without the addition of surfactant and without air supply.

Table 1

| | Sample | | Ultrasonic Oscillation Frequency [MHz] | Ultrasonic Attenuation Rate [%] |
|---|---|---|---|---|
| | Amount of Gas Bubbles [% by volume] | Dispersed Material [% by mass] | | |
| Example 1-1 | 0.5 | - | 3 | 24 |
| Example 1-2 | 1.0 | - | 0.3 | 8 |
| Example 1-3 | 1.0 | - | 0.5 | 38 |
| Example 1-4 | 1.0 | - | 1 | 50 |
| Example 1-5 | 1.0 | - | 2 | 68 |
| Example 1-6 | 1.0 | - | 3 | 74 |
| Example 1-7 | 1.5 | - | 3 | 99 |
| Example 1-8 | 1.0 | LBKP 1.0 | 3 | 74 |
| Example 1-9 | 1.0 | Calcium 1.0 Carbonate | 3 | 75 |
| Example 1-10 | - | LBKP 1.0 | 3 | 1 |
| Example 1-11 | - | LBKP 1.5 | 3 | 2 |
| Example 1-12 | - | Calcium 1.0 Carbonate | 3 | 2 |
| Example 1-13 | - | Calcium Carbonate1.5 | 3 | 3 |
| Blank | - | - | 3 | 0 |

As shown in Table 1, it was confirmed that the more the amount of gas bubbles, the greater the ultrasonic attenuation rate (Example 1-1, Example 1-6, and Example 1-7). It can also be said that the higher the ultrasonic oscillation frequency, the greater the ultrasonic attenuation rate and the easier it is to detect underwater gas bubbles (Example 1-2 to Example 1-6).

On the other hand, for the water dispersions of LBKP or calcium carbonate (Example 1-10 to Example 1-13), it was confirmed that the ultrasonic attenuation rate is small and it is difficult to reduce the ultrasonic intensity by the dispersed materials.

Furthermore, when the water dispersion of LBKP or calcium carbonate contained gas bubbles (Example 1-8 and Example 1-9), the detection of gas bubbles was about the same level as that of the water containing gas bubbles (Example 1-6). From this, it can be said that in the paper manufacturing process, selective detection of underwater gas bubbles is possible even for pulp slurries containing pulp fibers such as LBKP, fillers such as calcium carbonate, etc. as main components.

[Test 2] (Correlation between Ultrasonic Attenuation Rate and Amount of Gas Bubbles and Gas Bubble Diameter)

A surfactant (a mixture of sodium $\alpha$-olefin sulfonate and polyoxyethylene fatty acid alkanolamide) was added to aerated tap water in amounts adjusted to produce each amount of gas bubbles shown in Table 2, and fed into the water-feeding pipe. Air was introduced into this water-feeding pipe, and the water was fed to the ultrasonic through-beam sensor and the laser diffraction/scattering particle size distribution analyzer connected in series at the flow rate of 10 L/minute, and the ultrasonic attenuation rate and the gas bubble diameter were measured at 0.1 second intervals for 10 minutes.

If the ultrasonic attenuation rate was less than 0.5%, it was within the detection error range and was considered to be free of gas bubbles.

An occurrence ratio and an average value of gas bubbles with an ultrasonic attenuation rate having 0.5% or more, and the measurement results of the gas bubble diameter are shown in Table 2.

Note that the blank was fed without air.

Table 2

| | Amount of Gas Bubbles [% by volume] | Addition Amount of Surfactant [%] | Ultrasonic Attenuation Rate (0.5% or more) | | Average Gas Bubble Diameter [μm] |
|---|---|---|---|---|---|
| | | | Occurrence Ratio [%] | Average Value [%] | |
| Example 2-1 | 0.01 | 0 | 3 | 6.0 | 322 |
| Example 2-2 | 0.01 | 0.00013 | 5 | 5.8 | 289 |
| Example 2-3 | 0.01 | 0.0013 | 52 | 1.3 | 132 |
| Example 2-4 | 0.01 | 0.013 | 97 | 0.8 | 91 |
| Example 2-5 | 0.005 | 0.0013 | 25 | 1.4 | 134 |
| Example 2-6 | 0.02 | 0.0013 | 96 | 1.6 | 135 |
| Blank | - | 0.0013 | 0 | - | - |

As the amount of surfactant to be added increased, the average value of the ultrasonic attenuation rate was reduced and the average gas bubble diameter tended to become small (Example 2-1 to Example 2-4). From this, it can be said that the ultrasonic attenuation rate is an index of the gas bubble diameter (gas bubble size).

In addition, the occurrence ratio of gas bubbles with the ultrasonic attenuation rate of 0.5% or more was 0% when the gas bubbles were not contained (blank), and became large along with the increase in the amount of gas bubbles when the average gas bubble diameters were in comparable level (Example 2-5, Example 2-3, and Example 2-6). From this, it can be said that the occurrence ratio of gas bubbles with the ultrasonic attenuation rate of 0.5% or more is an index of the number of gas bubbles under water.

Therefore, based on the data distribution of the ultrasonic attenuation rate, it is possible to estimate the gas bubble diameter distribution and the volume distribution of the underwater gas bubbles, and the amount of underwater gas bubbles.

[Test 3] (Continuous Measurement Test)

Various samples collected during the paper manufacturing process and shown in Table 3 below were fed into the water-feeding pipe at the flow rate of 10 L/minute, and a state (blocked or not) of a water-feeding path where the ultrasonic through-beam sensor or the volumetric underwater gas bubble measuring apparatus was placed was observed for a period of 7 days.

To inhibit blockage due to slime occurrence, 50 mg/L of 5-chloro-2-methyl-4-isothiazolin-3-one was added at the beginning of the test.

When both of the ultrasonic through-beam sensor and the volumetric underwater gas bubble measuring apparatus were used for each sample, the times to be blocked state are shown in Table 3.

Table 3

| | Sample | SS Concentration [mg/L] | Residue Fraction on Sieve Having Opening of 20 μm [mg/L] | Time to Blockage | |
|---|---|---|---|---|---|
| | | | | Ultrasonic Through-Beam Sensor | Volumetric Gas Bubble Measuring Apparatus |
| Example 3-1 | White Water (1) | 320 | 100 | ≥ 7 days | 36 hours |
| Example 3-2 | White Water (2) | 3600 | 500 | ≥ 7 days | 9 hours |
| Example 3-3 | White Water (3) | 6900 | 2500 | ≥ 7 days | |

(continued)

| | Sample | SS Concentration [mg/L] | Residue Fraction on Sieve Having Opening of 20 μm [mg/L] | Time to Blockage | |
|---|---|---|---|---|---|
| | | | | Ultrasonic Through-Beam Sensor | Volumetric Gas Bubble Measuring Apparatus |
| Example 3-4 | Inlet Slurry (1) | 5900 | 4800 | ≥ 7 days | 2 hours |
| Example 3-5 | Inlet Slurry (2) | 15800 | 12300 | ≥ 7 days | |
| Example 3-6 | White Water Recovered as Clear Water | 120 | 50 | ≥ 7 days | ≥ 7 days |
| Blank | Tap Water | 0 | 0 | ≥ 7 days | ≥ 7 days |

As shown in Table 3, the white water recovered as clear water (Example 3-6), which had a low SS concentration and a low residue fraction on the sieve having an opening of 20 μm, showed no blockage for more than 7 days even when any of the ultrasonic through-beam sensor and the volumetric gas bubble measuring apparatus were used.

Other samples (Example 3-1 to Example 3-5), which had a high SS concentration and a high residue fraction on the sieve having an opening of 20 μm, showed no blockage for more than 7 days when the ultrasonic through-beam sensor was used. On the other hand, when the volumetric gas bubble measuring apparatus was used, blockages were observed within 2 days near the switching valves for water passing and sealing, and for pressurization and depressurization.

From this, it can be said that the ultrasonic through-beam sensor can perform continuous detection of gas bubbles in water containing fibrous materials for a long time compared with the volumetric gas bubble measuring apparatus.

[Test 4] (Addition of Degassing Agent)

The degassing agent (emulsion of a mixture of a higher alcohol and paraffin) was added to an inlet slurry of an apparatus for producing cardboard-base paper in each amount to be added shown in Table 4, and the inlet slurry was passed through the stirring pump at the flow rate of 10 L/minute and allowed to remain in a degassing tank for 30 seconds to degas the slurry. Here the amount of gas bubbles in the inlet slurry was adjusted so that the amount of gas bubbles having the average gas bubble diameter of 100 μm was 2% by volume when fed to the stirring pump at the flow rate of 10 L/minute in a filtrate of which the inlet slurry was filtered through a filter having a pore size of 5 μm.

The degassed slurry was fed into the water-feeding pipe at the flow rate of 10 L/minute and the ultrasonic attenuation rate and the amount of gas bubbles were measured by the ultrasonic through-beam sensor or the volumetric underwater gas bubble measuring apparatus. The measurement results are shown in Table 4.

Table 4

| | Addition Amount of Degassing Agent [mg/L] | Ultrasonic Attenuation Rate [%] | Amount of Gas Bubbles [% by volume] |
|---|---|---|---|
| Example 4-1 | 0 | 62 | 1.0 |
| Example 4-2 | 1 | 49 | 0.9 |
| Example 4-3 | 5 | 22 | 0.6 |
| Example 4-4 | 10 | 17 | 0.5 |
| Example 4-5 | 20 | 14 | 0.4 |

It is confirmed that the larger the amount of degassing agent to be added, the smaller the ultrasonic attenuation rate and the smaller the amount of gas bubbles. Since the degassing effect by means of the degassing agent is reflected in the ultrasonic attenuation rate, it can be said that the amount of degassing agent to be added can be adjusted based on the ultrasonic attenuation rate measured by the ultrasonic through-beam sensor.

[Test 5] (Influence of Pressure (1))

Raw material slurry at an outlet of a fan pump (a pressure of 0.4 MPa) in the apparatus for producing cardboard-base paper was fed into the water-feeding pipe at the flow rate of 10 L/minute, and the ultrasonic attenuation rate was measured by changing a pressure at the measurement section of the ultrasonic through-beam sensor. The measurement results are shown in Table 5.

Table 5

|  | Pressure [MPa] | Ultrasonic Attenuation Rate [%] |
|---|---|---|
| Example 5-1 | 0 | 88 |
| Example 5-2 | 0.05 | 86 |
| Example 5-3 | 0.1 | 79 |
| Example 5-4 | 0.15 | 32 |
| Example 5-5 | 0.2 | 16 |
| Example 5-6 | 0.3 | 14 |
| Example 5-7 | 0.4 | 13 |

As shown in Table 5, it was observed that the ultrasonic attenuation rate tended to decrease as the pressure at the measurement section was increased, and when the pressure was 0.15 MPa or more, it tended to decrease significantly (Example 5-4 to Example 5-7). From this, it can be said that when the objective is to measure an amount of gas bubbles in the slurry on a wire mesh under, for example, atmospheric pressure, a pressure at the measurement section is preferably less than 0.15 MPa, and more preferably 0.1 MPa or less.

[Test 6] (Influence of Pressure (2))

Raw material slurry at an outlet of a fan pump (a pressure of 0.25 MPa) in an apparatus for producing high-quality paper was fed into the water-feeding pipe at the flow rate of 10 L/minute, and the ultrasonic attenuation rate and the amount of gas bubbles were measured by changing a pressure at the measurement section of the ultrasonic through-beam sensor or the volumetric underwater gas bubble measuring apparatus. The measurement results are shown in Table 6.

Table 6

|  | Pressure [MPa] | Ultrasonic Attenuation Rate [%] | Amount of Gas Bubbles [% by volume] |
|---|---|---|---|
| Example 6-1 | 0.25 | 24 | 1.4 |
| Example 6-2 | 0.22 | 24 | 1.3 |
| Example 6-3 | 0.20 | 25 | 1.4 |
| Example 6-4 | 0.15 | 38 | 1.4 |
| Example 6-5 | 0.10 | 63 | 1.4 |
| Example 6-6 | 0.05 | 72 | 1.3 |
| Example 6-7 | 0 | 74 | 1.4 |

The amount of gas bubbles measured by the volumetric underwater gas bubble measuring apparatus was almost the same regardless of the pressure of the measurement section. It is considered that this is because the volumetric underwater gas bubble measuring apparatus involves pressurization and depressurization operations during measurement, and dissolved gases become gas bubbles regardless of the pressure of the measurement section, and the measured value of the amount of gas bubbles on a volume basis includes the dissolved gases.
In contrast, though the ultrasonic attenuation rate was almost the same when the pressure at the measurement section was 0.20 MPa or more (Example 6-1 to Example 6-3), it tended to become significantly larger when the pressure was 0.15 MPa or less (Example 6-4 to Example 6-7). This is inferred to be due to the fact that in the measurement by the ultrasonic through-beam sensor, the dissolved gas becomes gas bubbles to be detected when the pressure at the measurement section is reduced more than a certain level from the pressure at the outlet of the fan pump.

From this, it can be said that by measuring the ultrasonic attenuation rate under a pressure equivalent to the pressure near the outlet of the water pump, a state in which the pressure is higher than atmospheric pressure, it is possible to accurately monitor gas bubbles that cause a decrease in the efficiency of water-feeding by the pump.

**Claims**

1. An underwater bubble detecting method for detecting gas bubbles in water containing fibrous materials and gas bubbles by measuring intensity of ultrasonic waves received by a reception unit of an ultrasonic through-beam sensor.

2. The underwater bubble detecting method according to claim 1, wherein an oscillation frequency of the ultrasonic waves is 0.5 MHz or more.

3. The underwater bubble detecting method according to claim 1 or 2, wherein the water containing fibrous materials and gas bubbles is flowing water and the intensity of ultrasonic waves is monitored continuously and periodically.

4. The underwater bubble detecting method according to claim 1 or 2, wherein the water containing fibrous materials and gas bubbles has a residue fraction of 100 mg/L or more on a sieve having an opening of 20 $\mu$m.

5. The underwater bubble detecting method according to claim 1 or 2, wherein the water containing fibrous materials is an aqueous slurry in a paper manufacturing process.

6. The underwater bubble detecting method according to claim 1 or 2, wherein a pressure of the water containing fibrous materials and gas bubbles at a measurement point of the intensity of ultrasonic waves is less than 0.15 MPa.

7. The underwater bubble detecting method according to claim 3, wherein the pressure of the water containing fibrous materials and gas bubbles at the measurement point of the intensity of ultrasonic waves is 0.9 to 1.1 times the pressure at a target point for monitoring underwater gas bubbles upstream of the measurement point.

8. The underwater bubble detecting method according to claim 1 or 2, wherein an ultrasonic attenuation rate expressed by the following expression (1) is an index of an amount of gas bubbles:

$$\text{Ultrasonic Attenuation Rate } [\%] = (R_0 - R_1)/R_0 \times 100 \qquad (1)$$

wherein $R_0$ is the ultrasonic reception intensity measured for water free of gas bubbles, and $R_1$ is the ultrasonic reception intensity measured for the water containing fibrous materials and gas bubbles.

9. A degassing agent adding method using the underwater bubble detecting method according to claim 1 or 2, wherein an amount of a degassing agent to be added to the water containing fibrous materials and gas bubbles is controlled depending on the intensity of ultrasonic waves received.

10. A degassing agent adding method using the underwater bubble detecting method according to claim 8, wherein an amount of a degassing agent to be added to the water containing fibrous materials and gas bubbles is controlled using the ultrasonic attenuation rate as the index of the amount of gas bubbles.

## INTERNATIONAL SEARCH REPORT

International application No.

**PCT/JP2023/013813**

### A. CLASSIFICATION OF SUBJECT MATTER

*G01N 29/032*(2006.01)i
FI: G01N29/032

According to International Patent Classification (IPC) or to both national classification and IPC

### B. FIELDS SEARCHED

Minimum documentation searched (classification system followed by classification symbols)

G01N29/00 - 29/52

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2019-90614 A (DISCO CORPORATION) 13 June 2019 (2019-06-13) paragraphs [0009]-[0010], [0021], [0029]-[0030], [0047]-[0051], fig. 2, 3B | 1-10 |
| Y | US 5891307 A (VOITH SULZER PAPER TECHNOLOGY NORTH AMERICA, INC.) 06 April 1999 (1999-04-06) column 1, lines 51-56, column 2, line 62 to column 3, line 67, column 4, lines 1-5, fig. 3 | 1-10 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **22 May 2023** | **06 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/013813**

| Patent document cited in search report | | | Publication date (day/month/year) | Patent family member(s) | | | Publication date (day/month/year) |
|---|---|---|---|---|---|---|---|
| JP | 2019-90614 | A | 13 June 2019 | CN | 109765293 | A | |
| | | | | TW | 201918290 | A | |
| US | 5891307 | A | 06 April 1999 | EP | 1012390 | A1 | |
| | | | | CA | 2291625 | A1 | |

Form PCT/ISA/210 (patent family annex) (January 2015)

**EP 4 521 105 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012076059 A

- JP 2005133240 A